Europäisches Patentamt

European Patent Office

Office européen des brevets

(11) Publication number: **0 316 288**
**A2**

# EUROPEAN PATENT APPLICATION

(21) Application number: **88830474.8**

(22) Date of filing: **08.11.88**

(51) Int. Cl.4: **F 16 H 3/14**

(30) Priority: **09.11.87 IT 953587**

(43) Date of publication of application:
**17.05.89 Bulletin 89/20**

(84) Designated Contracting States:
**AT DE ES FR GB NL**

(71) Applicant: **Bondioli, Edi**
**Via Gina Bianchi 18**
**46029 Suzzara Mantova (IT)**

(72) Inventor: **Bondioli, Edi**
**Via Gina Bianchi 18**
**46029 Suzzara Mantova (IT)**

(74) Representative: **Mannucci, Gianfranco, Dott.-Ing.**
**Ufficio Tecnico Ing. A. Mannucci Via della Scala 4**
**I-50123 Firenze (IT)**

(54) **Motion-reversing device with opposing ring bevel gears able to be alternatively coupled to the shaft through an axial manoeuvre.**

(57) The device comprises: a bevel pinion (9); two opposing ring bevel gears (18, 20) simultaneously meshing with said pinion (9) on opposite sides thereof, which are idly fitted on the same shaft (14) and, for an alternative connection of said ring gears (18, 20) with said shaft (14), two sets of radially movable pawls (24) housed in said shaft of the ring bevel gears and able to cooperate with seats (22) in the hole of the hub of said ring bevel gears (18, 20); and a member (28) for controlling said pawls (24), which member is axially movable between two opposite engagement positions passing through an idle position.

FIG.1

EP 0 316 288 A2

## Description

## MOTION-REVERSING DEVICE WITH OPPOSING RING BEVEL GEARS ABLE TO BE ALTERNATIVELY COUPLED TO THE SHAFT THROUGH AN AXIAL MANOEUVRE

The invention relates to a mechanical device for reversing the motion between two shafts having orthogonal axes, which has been designed to achieve very limited overall dimensions inside a sealed box e.g. an oil-bath gearbox.

Substantially, the device comprises in combination:
- a bevel pinion;
- two opposing ring bevel gears simultaneously meshing with said pinion on opposite sides thereof, which gears are idly fitted on the same shaft;
- for an alternate connection of said ring gears with said shaft, two sets of radially movable pawls housed in said shaft of the ring bevel gears and able to cooperate with seats in the hole of the hub of said ring bevel gears;
- and a member for controlling said pawls, axially movable inside said shaft of the ring bevel gears, in order to act alternatively on one or the other set of pawls passing through an intermediate idle position.

In practice, the pawls can be made to slide within radial seats formed according to transverse planes inside the shaft of the ring bevel gears, and the control member is a rod sliding in an axial seat and shaped with control profiles able to alternatively act on the pawls of the two ring gears in order to urge said pawls in centrifugal direction until they enter the channel-like seats of the holes of the hub of said ring gears. The seats disposition is symmetrical with respect to the control rod axis; the shaping of the head of the pawls and that of the relevant channel-like seats for said heads are symmetrically disposed with respect to radial planes and with inclined profiles.

The rod provided with control profiles may be shaped like a revolution body with circular cross-sections, and the inner ends of the pawls exhibit a profile like a ruled surface (especially a cylindrical surface) parallel to the control member axis in order to be kept in the right orientation with respect to the channel-like seats wherein they must engage.

Advantageously, each pawl has a transverse hole for a helical spring apt to adhere by its ends to the wall of the pawl sliding seat to hamper spontaneous slidings thereof.

For each ring gear one or more sets of pawls may be provided, disposed according to a corresponding number of planes transversally disposed with respect to the shaft of the ring gears.

On the shaft, a guide peg may be provided for delimiting the run of the control rod between the two alternative engagement positions; said peg may be elastic to cooperate with indentations, capable of creating a resistance to the sliding.

The invention will be better understood by following the description and the attached drawing, which shows a practical, non limitative exemplification of the same invention. In the drawing:

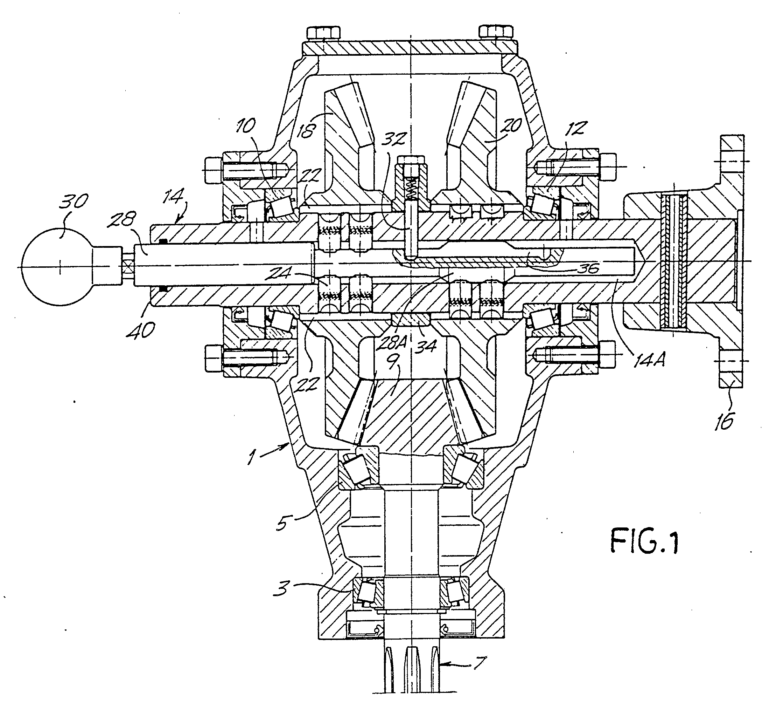

Fig.1 shows a section view according to a plane including the axes of the two orthogonal shafts;

Figs.2 and 3 show local cross-sections of a set of pawls in correspondence of the engagement and disengagement condition thereof, respectively;

Figs.4, 5 and 6 show a diametral section of one of the ring gears and two orthogonal views of a pawl; and

Fig.7 is an enlarged detail of Fig.1.

According to what is illustrated in the attached drawing. numeral 1 indicates a housing which forms seats for two rolling bearings 3 and 5 provided for supporting a shaft 7 with which a bevel pinion gear 9 is solid. Further rolling bearings 10, 12 borne by the housing support a second shaft 14 which goes through the housing and has, according to the drawing, a flange 16 or other member for the coupling with the drive member to which it is connected. The intermediate part of shaft 14 between the two rolling bearings 10 and 12, has an oversized diameter, and two opposite ring bevel gears 18 and 20 facing each other are idle mounted thereon, and both are meshing with pinion 9 on diametrally opposite sides thereof, the two ring bevel gears thus rotating in opposite directions. Either of the two opposing ring bevel gears can be coupled to shaft 14 in order to drive shaft 14 into motion in opposite directions, or to drive shaft 7 into motion in opposite directions, as shaft 7 or shaft 14 may be indifferently driven.

In order to carry out the coupling, in the hubs of the two ring bevel gears 18 and 20 longitudinal slots in the form of channel-like seats 22 are formed, in number of four in the illustrated example, said slots being uniformly distributed around the circumference. Each of these channel-like seats 22 are shaped according to a symmetry plane going through the shaft axis and with inclined banks. Respective radial pawls 24 may cooperate with the channel-like seats 22 of each one of the ring bevel gears 18 and 20, said pawls being housed within radial seats formed in the shaft 14 and being able to slide radially in said seats. For each ring gear, there may be provided only one set of pawls 24 disposed according to a planeplaced transversely to the shaft axis, or two or even more sets of pawls may be provided substantially lying in correspondence of a corresponding number of transverse planes. The number of pawls and the sets of pawls which have to cooperate with each of the ring gears depend on the torque that must be transmitted through the pawls when these engage the seats 22 by their outer ends or heads that are shaped with inclined profiles corresponding to those of the banks of seats 22. Each pawl has in its inner end a shaping formed as a portion 24A of cylindrical surface, whose generating line is parallel to that of the profile of the outer head, for the purposes indicated herebelow. Each pawl 24 has a transverse hole 26 wherein a thin helical spring can be housed whose ends press against the seat of the respective pawl in order to prevent spontaneous movements of the pawl, especially due to centrifugal action; in this way, the pawl remains in the position imposed thereto by the control members located outside thereof.

Shaft 14 has a deep axial cavity wherein a control rod member 28 can slide, said member being operable from one end by a knob 30 which is axially engaged to said control member 28, but which is able to perform a relative rotation to meet obvious accident prevention requirements. The control rod member 28 is prevented from rotating with respect to shaft 14 by the presence of an elastic peg 32, able to slide within a radial seat formed partly in the shaft 14 by a through hole and partly in a ring 34 fitted on shaft 14 between the two ring gears 18 and 20; through its inner end the elastic peg 32 engages a longitudinal slot 36 formed in the control rod 28. The slot 36 is of suitable length and terminates with two indentations 36A wherein the elastic peg 32 may be engaged at the end of an axial run of control rod 28, at which end corresponds the coupling condition of either one or the other of the two ring bevel gears 18 and 20. Slot 36 extends symmetrically and to a length greater than that of a thickness 28A of control rod 28. Flare and, in particular, conical fillets like those illustrated in the drawing, are provided between said thickness and the same rod 28. The axial seat 14A in the shaft 14 has a cross-section of dimensions corresponding to those of thickness 28A which can thus slide between two positions defined by peg 32 and indentations 36A. In correspondence of the end of rod 28 projecting from shaft 14 and engaging the control knob 30, said rod has a portion having a diameter corresponding to that of thickness 28A.

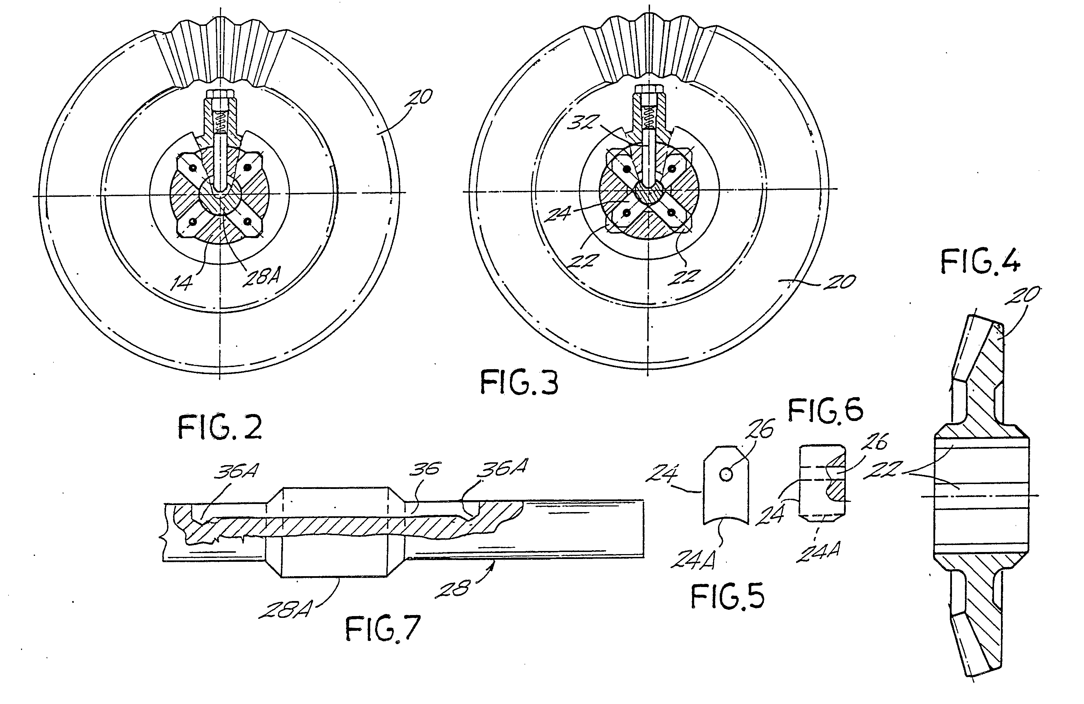

When control rod 28 is placed in an intermediate position, thickness 28A is correspondingly placed between the sets of pawls 24 relevant to the two ring gears 18 and 20 in a disengagement condition of both ring gears with respect to shaft 14. This disengagement condition of one ring gear or of each ring gear is determined by the fact that pawls 24 can be urged in centripetal direction owing to the cooperation between the inclined banks of the channel-like seats 22 and the corresponding shapings of the outer heads of pawls 24. In these conditions, the pawls rest with their profile 24A on the smaller diameter portion of control rod 28 and do not project from shaft 14 (condition as depicted in Fig.3). When the control rod 28 is moved from this intermediate position to an end position defined by the cooperation of elastic peg 32 with slot 36, the thickness 28A of control rod 28 acts on the pawls of the set or of the two subsequent sets met during such movement and, at a predetermined relative angular position between shaft 14 and the corresponding ring gear 18 or 20, they are pushed into the channel-like seats 22 by the flare profiles between rod 28 and thickness 28A and stabilized in this engagement position of the heads of said pawls 24 in the channel-like seats 22 of the ring gear to be coupled (condition of Fig.2). In this condition, the motion transmission takes place through the engaged ring gear. By a reverse manoeuvre, the coupling, i.e. the engagement, is obtained with the other of the two ring gears. In the disengagement positions illustrated in Fig.3, the pawls remain in the reached condition without being urged by centrifugal action and thus without being compelled to bounce at the inside of seats 22 and pushed back from same seats; this takes place thanks to the springs housed in the transverse holes 26. The pawls remain always oriented in the proper direction inside their seats of shaft 14 (even if these seats are cylindrical) owing to the contact of the partial cylindrical surfaces 24A of the inner ends of the pawls with the cylindrical wall of control rod 28, both over the length of thickness 28A having smaller diameter and over the one having larger diameter, to which the curvature of the end 24A of pawls corresponds; this disposition is sufficient to keep pawls always with their outer heads in the right orientation with respect to slots 22 of the hubs of the two ring gears 18 and 20.

When, from the engagement position of one of the ring gears, for example the one indicated by 20, it is necessary to bring, through an axial displacement, the control rod 28 either into the idle position or - passing this position - into the position allowing the coupling of the other of ring gears, the initial movement of rod 28 is possible only by winning the resistance opposed to this displacement by the elastic peg 32 which engages the corresponding indentantion 36A at the end of slot 36 of said control rod 28. The coupling position of each of the ring gears is thus stabilized. The manoeuvre is carried out in absence of motion and load, and the coupling of either one or the other of the two ring gears is surely correct as, in order to shift from one engagement position to the other, it is necessary to pass the intermediate position in which both ring gears are idle, i.e. disengaged, in which intermediate position said ring gears continue to rotate in the two directions if shaft 7 is operated.

Obviously, the unit operates in oil bath and a suitable seal 40 is provided between the control rod 28 and the end of seat 14A in the shaft 14 for the exit of same rod. A lubrication and a possible lubricant backflow with respect to seat 14A in the shaft 14 for the rod 28 is provided by forming radial holes for the oil passage between the rolling bearings 10 and 12 and the axial seat 14A dug in the shaft 14 for the control rod 28.

## Claims

1. A mechanical device for reversing the motion between two shafts (7, 14) with orthogonal axes, comprising: a bevel pinion (9); two opposing ring bevel gears (18, 20) simultaneously meshing with said pinion (9) on opposite sides thereof, which ring bevel gears (18, 20) are idly fitted on the same shaft (14); for an alternative connection of said ring gears (18, 20) with said shaft (14), two sets of radially movable pawls (24) housed in said shaft (14) of the ring bevel gears (18, 20) and able to cooperate with seats (22) in the hole of the hub of said ring bevel gears (18, 20); and a member (28) for controlling said pawls (24), which is axially movable inside said shaft (14) of the ring bevel gears, in order to act alternatively on one or the other set of pawls passing through an intermediate idle position.

2. Device according to the preceding claim, characterized in that the pawls (24) are able to slide within radial seats formed in the shaft (14)of the ring bevel gears (18, 20) according to transverse planes, and that the control member (28) is a rod sliding within an axial seat (14A) which rod is shaped with control profiles (28A) able to alternatively act on the pawls of the two ring gears in order to urge said pawls in centrifugal direction until they enter the channel-like seats (22) of the holes of the hubs of said ring gears; the disposition of the seats (22) being symmetrical with respect to the control member axis; and the shaping of the pawls head and that of the relevant channel-like seats (22) for the same heads being symmetrical with respect to radial planes and having inclined profiles.

3. Device according to the preceding claims, characterized in that the rod (28) with control profiles (28A) is shaped like a revolution body with circular cross-sections, and that the inner ends (24A) of the pawls have a profile like a reeled surface (especially a cylindrical surface) which is parallel to the axis of the control member (28) in order to be kept in the right orientation with respect to the channel-like seats (22) wherein they must engage.

4. Device according to the preceding claims, characterized in that each pawl (24) has a transverse hole (26) for a helical spring capable of adhering through its ends to the wall of the pawl sliding seat, in order to hamper spontaneous slidings said pawls (24).

5. Device according to the preceding claims, characterized in that for each ring gear (18, 20) more sets of pawls (24) may be provided, disposed according to a corresponding number of planes transversely placed with respect to the shaft (14) of the ring gears.

6. Device according to the preceding claims, characterized in that it comprises a guide peg (32) on the shaft (14) for delimiting the run of the control rod (28) between the two alternative engagement positions; said peg (32) being elastic in order to cooperate with indentations (36A) able to cause a resistance to the movement of the control member (28).

FIG.1

FIG.4

FIG.6

FIG.5

FIG.3

FIG.2

FIG.7